# FASCICULE DE BREVET EUROPEEN

(11) **EP 3 931 018 B1**
(45) Date de publication et mention de la délivrance du brevet: **25.10.2023**
(21) Numéro de dépôt: 20702495.1
(22) Date de dépôt: 06.02.2020
(51) Int. Cl.: B60K 11/04, F01P 5/10, F28F 9/00

(54) **SUPPORT MULTIFONCTION POUR MOTEUR THERMIQUE**
MULTIFUNKTIONSHALTERUNG FÜR EINE WÄRMEKRAFTMASCHINE
MULTIFUNCTIONAL SUPPORT FOR A HEAT ENGINE

(30) Priorité: 26.02.2019 FR 1901958
(43) Date de publication de la demande: 05.01.2022
(73) Titulaire: Renault s.a.s, 92100 Boulogne Billancourt (FR)
(72) Inventeur: CAYER, Regis, 92320 CHATILLON (FR); DESAFIT, Christophe, 78370 PLAISIR (FR); MARREL, Sebastien, 28100 DREUX (FR)
(74) Mandataire: Renault Group
(86) Numéro de dépôt international: PCT/EP2020/053002
(87) Numéro de publication internationale: WO 2020/173679

(56) Documents cités:
- WO-A1-2018/070375
- CN-B- 106 812 582
- DE-A1-102013 202 146
- FR-A1- 2 965 297
- US-B2- 7 293 535

## Description

L'invention concerne un support multifonction d'un moteur de véhicule.

L'invention concerne aussi un module de refroidissement comprenant ledit support. L'invention concerne enfin un moteur pour véhicule et un véhicule comprenant un tel module de refroidissement, ainsi qu'un procédé de montage d'un module de refroidissement.

Le compartiment moteur d'un véhicule comprend un volume restreint dans lequel un certain nombre d'organes moteur doivent être placés. L'espace disponible pour l'implantation de nouveaux composants est réduit.

Notamment, les composants liés au refroidissement du moteur prennent un espace non-négligeable et le montage de ces composants est très délicat.

On connait la demande de brevet US7,293,535 décrivant un module de refroidissement destiné à un moteur. Ce module de refroidissement comprend un échangeur de chaleur, un ventilateur et une pompe à fluide de refroidissement. Le module de refroidissement comprend un cadre à l'intérieur duquel est disposée la pompe à fluide de refroidissement.

Cependant, un tel module est difficile à intégrer dans un compartiment moteur. En effet, le radiateur est intégré dans une même structure avec la pompe et le refroidisseur, ce qui rend ce module très volumineux est difficile à monter.

Par ailleurs, le document DE 10 2013 202 146 A1 divulgue un module de refroidissement d'un type connu, le cadre étant réalisé par l'assemblage de quatre parties.

Le but de l'invention est de fournir un dispositif remédiant aux inconvénients ci-dessus et améliorant les modules de refroidissement connus de l'art antérieur. En particulier, l'invention permet de réaliser un support multifonction qui permette de loger des organes du module de refroidissement dans un minimum d'espace disponible et qui facilite le montage du moteur.

L'invention concerne un support multifonction pour un module de refroidissement d'un moteur de véhicule, notamment de véhicule automobile, suivant les caractéristiques de la revendication 1.

Dans un mode de réalisation, le cadre comprend au moins un premier moyen de coopération destiné à s'emboîter avec un deuxième moyen de coopération du radiateur.

Dans un mode de réalisation, ledit premier moyen de coopération est un moyen de clippage.

Suivant l'invention, le cadre comprend une partie principale sensiblement en forme de U et une plaque de fermeture fixée sur les deux extrémités de la partie principale.

L'invention concerne également un module de refroidissement comprenant un support selon l'invention et au moins deux, voire trois, des organes suivants à l'intérieur du cadre du support : une pompe à fluide de refroidissement, une électrovanne et un refroidisseur.

Dans un mode de réalisation, le module comprend un radiateur fixé au support par une des faces de la partie principale par emboîtement, préférentiellement par clippage.

Dans un mode de réalisation, la pompe à fluide de refroidissement, et/ou l'électrovanne sont fixés à la partie principale du cadre du support, notamment par au moins une vis.

Dans un mode de réalisation, la pompe à fluide de refroidissement et le refroidisseur sont connectés ensemble par un circuit d'eau comprenant une vanne by-pass, notamment une vanne by-pass en plastique.

Dans un mode de réalisation, le module comprend une structure encadrant le support et le radiateur.

L'invention concerne aussi un moteur ou une structure de caisse comprenant un module de refroidissement selon l'invention.

L'invention concerne également un véhicule, notamment un véhicule automobile comprenant un module de refroidissement selon l'invention et/ou un support de caisse selon l'invention.

L'invention concerne un procédé de montage d'un module de refroidissement selon l'invention. Le procédé de montage comprend une étape de fixation d'une électrovanne et/ou d'un refroidisseur et/ou d'une pompe à fluide de refroidissement au support. Le procédé de montage comprend également une étape de fixation du support, notamment par clippage, à un radiateur en faisant coopérer le premier moyen de connexion et le deuxième moyen de connexion.

L'invention concerne enfin un procédé de montage d'un véhicule comprenant le procédé de montage d'un module de refroidissement selon l'invention et le positionnement du module dans la structure du châssis du véhicule, et en ce qu'un plot élastique du module et une fixation rotative du module sont tous deux respectivement insérés dans une traverse et dans un alésage de ladite structure.

Les dessins annexés représentent, à titre d'exemple, un mode de réalisation d'un module de refroidissement équipé d'un support selon l'invention et un véhicule comprenant un tel module.
[Fig. 1] La figure 1 représente un mode de réalisation d'un support selon l'invention vue en perspective.
[Fig. 2] La figure 2 représente un mode de réalisation d'un support selon l'invention vue de profil.

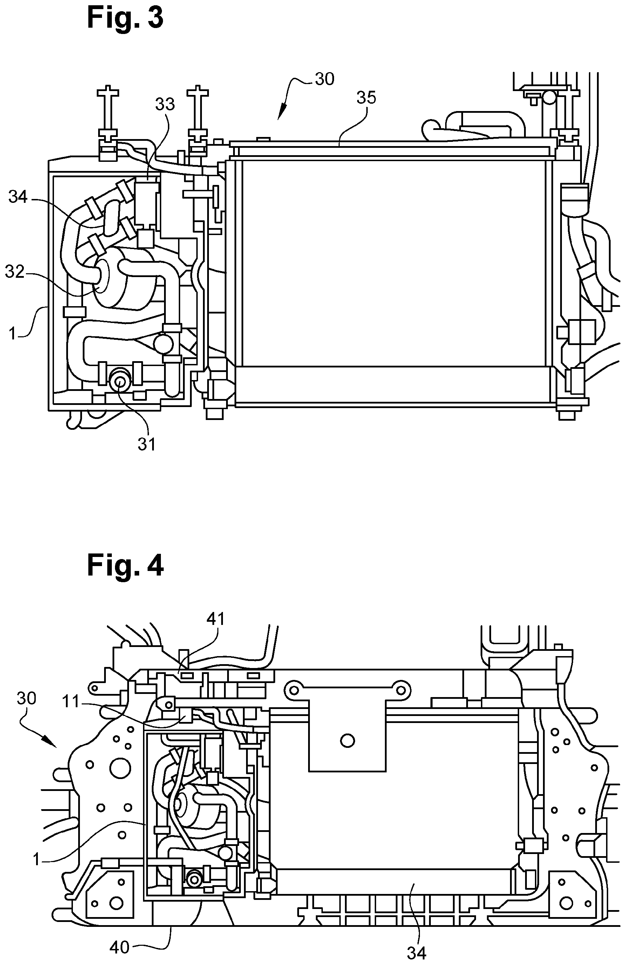

[Fig. 3] La figure 3 représente un mode de réalisation d'un support selon l'invention à l'intérieur duquel est monté une électrovanne, une pompe à fluide de refroidissement et un refroidisseur.
[Fig. 4] La figure 4 représente un mode de réalisation d'un module de refroidissement selon l'invention.
[Fig. 5] La figure 5 représente un mode de réalisation de la coopération par clippage entre le premier moyen de connexion 6 du support 12 et un deuxième moyen de connexion 36 du radiateur 35.
[Fig. 6] La figure 6 représente un schéma d'un mode de réalisation d'un véhicule 60 comprenant un moteur 50 comprenant un module 30 de refroidissement selon l'invention.

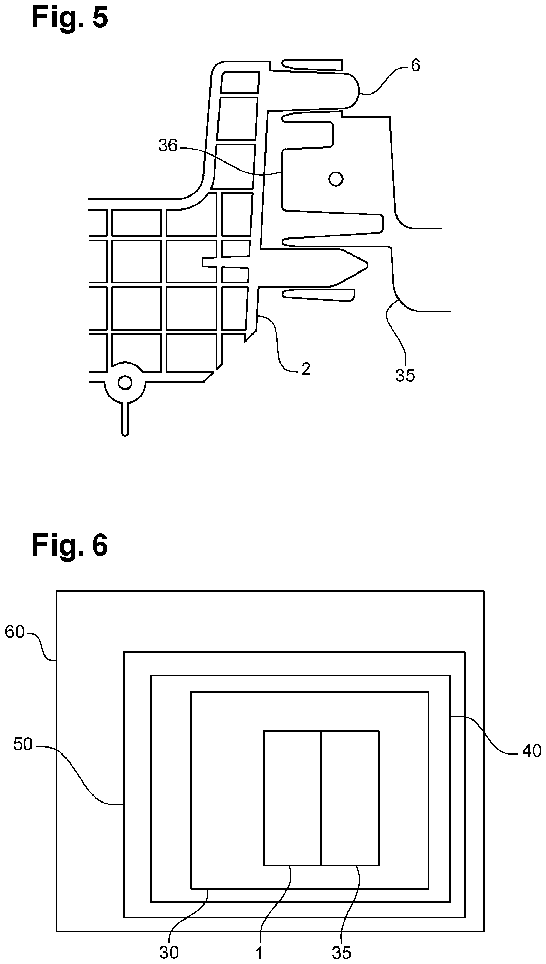

Un mode de réalisation d'un véhicule 60 est décrit ci-après en référence à la figure 6. Le véhicule est préférentiellement un véhicule automobile tel qu'une voiture ou un camion. Le véhicule comprend un mode de réalisation d'un moteur 50.

Le véhicule 60 comprend aussi une structure de caisse ou de châssis 40.

Le moteur comprend un mode de réalisation d'un module 30 de refroidissement. Le module 30 de refroidissement comprend un radiateur raccorder à un circuit de refroidissement. Le circuit de refroidissement permet d'éviter les risques de surchauffe susceptible de causer des dommages irrémédiables en faisant circuler un fluide entre le radiateur et les pièces chaudes du moteur. Le module 30 comprend ainsi différents organes 31, 32, 33 faisant parti du circuit de refroidissement.

Le module 30 comprend un mode de réalisation d'un support 1 destiné à être en contact avec le radiateur et à contenir des organes du circuit de refroidissement afin de compacter l'agencement du moteur dans la structure de caisse ou de châssis 40.

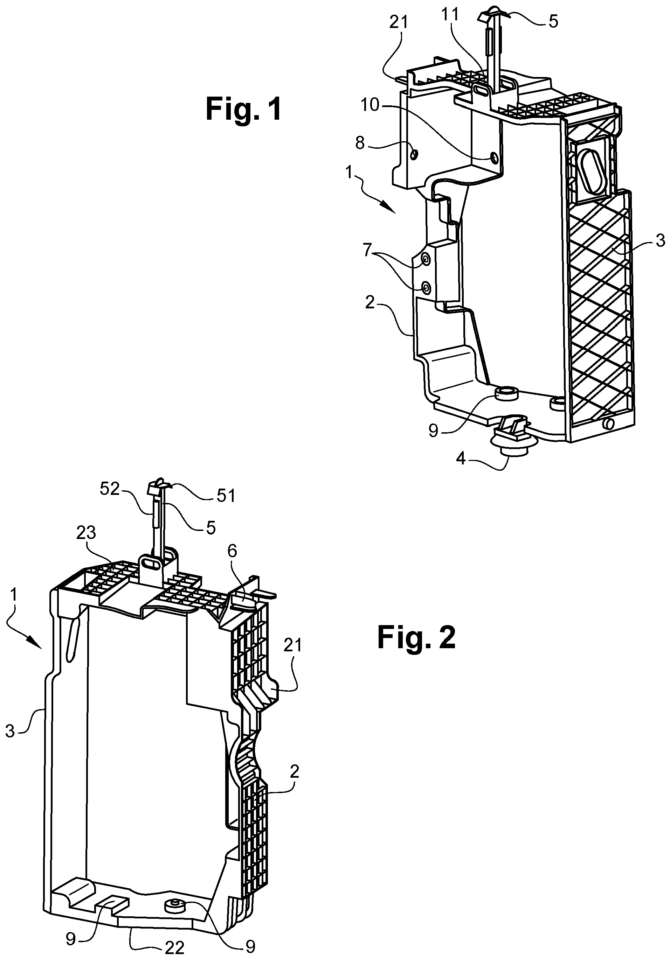

Un exemple de mode de réalisation d'un support multifonction 1 est décrit ci-après en référence aux figures 1 et 2.

Le support 1 comprend un cadre. Le cadre comprend quatre faces formant sensiblement une forme rectangulaire.

Le cadre comprend une partie principale 2. La partie principale est en forme de U ou sensiblement en forme de U. La partie principale comprend trois faces.

Le cadre comprend une plaque de fermeture 3. La plaque de fermeture 3 se fixe à chaque extrémité de la partie principale 2 en forme de U, formant le cadre.

Le module de refroidissement 30 comprend un radiateur 35 et le support 1 décrit ci-avant.

Le cadre comprend une première face 21 (ou un premier côté) destinée à être fixée sur un radiateur 35. Cette première face 21 est préférentiellement la face opposée de la face formée par la plaque de fermeture 3. Le cadre comprend également une deuxième face ou côté 22 et une troisième face ou côté 23 s'étendant dans un plan sensiblement perpendiculaire à la première face 21 et/ou s'étendant depuis la première face jusqu'à la plaque de fermeture 3.

L'épaisseur du cadre ou du support 1 est de l'ordre de l'épaisseur du radiateur 35. L'épaisseur du cadre ou du support 1 est, par exemple, inférieure à deux fois l'épaisseur du radiateur 35. Préférentiellement, l'épaisseur du cadre ou du support 1 est sensiblement égale à l'épaisseur du radiateur 35. Par l'épaisseur du cadre ou du support 1, on entend la dimension perpendiculaire au plan du cadre.

La hauteur du cadre ou du support 1 est de l'ordre de la hauteur du radiateur 35, par exemple, inférieure à 1,2 fois la hauteur du radiateur 35. Par « hauteur », on entend la dimension parallèle à la longueur de la première face 21 ou de la plaque de fermeture 3.

La largeur du cadre ou du support 1 est tout au plus de l'ordre de la hauteur du support 1 ou du cadre, par exemple, la largeur est comprise entre 0,2 fois et 1 fois la hauteur du support 1. Par « largeur du support 1 ou du cadre », on entend la dimension parallèle à la longueur de la deuxième face 22 ou de la troisième face 23.

Le cadre ou le support 1 est disposé de préférence parallèlement au radiateur 35, par exemple dans le même plan que le radiateur 35 ou sensiblement dans le même plan que le radiateur 35.

Comme illustré sur la figure 2, la partie principale 2 comprend au moins un premier moyen de connexion 6 pour être fixée directement au radiateur 35. Le premier moyen de connexion 6 peut être un moyen conçu pour s'emboîter dans un deuxième moyen de connexion 36 du radiateur 35. Le deuxième moyen de connexion 36 est complémentaire avec le premier moyen de connexion 6. Le montage du support 1 sur un radiateur 35 peut ainsi avantageusement être réalisé sans moyens de fixations comme des vis.

Le montage se trouve ainsi avantageux. Il ne nécessite pas d'opération de serrage ou de vissage dans cet espace très réduit.

Préférentiellement, le premier et le deuxième moyen de connexion 6, 36 comprennent des moyens de clippage.

Le radiateur 35 peut comprendre une boîte à eau de radiateur non-représentée. Dans un mode de réalisation, la boîte à eau de radiateur comprend le deuxième moyen de connexion 36 tel un moyen de clippage 36.

La partie principale 2 du cadre du support 1 peut comprendre en outre des moyens pour recevoir des organes 31, 32, 33 du moteur. Le module 30 de refroidissement comprend lesdits organes 31, 32, 33 du moteur. Lesdits organes peuvent comprendre une pompe à fluide de refroidissement 32, un refroidisseur, notamment du type « chiller » 33, et une électrovanne 31.

Le refroidisseur 33 et la pompe 32 à fluide de refroidissement sont connectés ensemble par un circuit fluidique. Le circuit fluidique comprend préférentiellement une vanne by-pass 34, notamment une vanne by-pass en plastique.

Le refroidisseur du type « chiller » 33 comprend, par exemple, un compresseur, un détendeur, un évaporateur et/ou un condenseur. Le refroidisseur comprend préférentiellement un échangeur de chaleur qui est destiné à refroidir un fluide, notamment un fluide caloporteur, par exemple de l'eau glycolée, par l'utilisation d'un fluide réfrigérant. Il s'apparente à un évaporateur d'un circuit de climatisation qui utilise le changement d'état d'un fluide réfrigérant pour refroidir l'air à destination de l'habitacle.

Dans un mode de réalisation, la pompe 32 de fluide de refroidissement est une pompe à eau et le circuit fluidique est un circuit d'eau.

Préférentiellement, lesdits organes 31, 32, 33 sont fixés sur les faces intérieures de la partie principale 2 du cadre du support 1 de manière à être tous encadrés par le cadre du support 1.

Comme illustré sur la figure 1, le support 1 comprend des alésages 7, 9, 10, permettant le passage de vis pour le montage des organes du moteur dans le cadre.

La partie principale 2 en forme de U peut comprendre deux alésages 9 sur une de ces faces pour la fixation de l'électrovanne 31.

Préférentiellement, l'électrovanne 31 est fixée sur une deuxième face 22 du cadre adjacent à la face comprenant la plaque de fermeture 3.

La partie principale 2 peut comprendre également des alésages 7 pour la fixation de la pompe 32 à fluide de refroidissement et/ou de son support. Préférentiellement, la pompe 32 à fluide de refroidissement est fixée sur la première face 21 du cadre. Les alésages 7 pour la fixation de la pompe 32 peuvent être agencés sur une saillie de la première face 21 de manière à être orientés perpendiculairement au plan du cadre.

La partie principale 2 peut comprendre aussi des alésages 10 pour la fixation du refroidisseur 33.

La partie principale 2 peut également comprendre au moins un moyen de passage et/ou de fixation d'un câble tel un alésage 8, préférentiellement sur la face du cadre qui est fixée à la boîte à eau de radiateur.

La partie principale 2 peut également comprendre au moins un moyen de passage et/ou de fixation d'au moins une canalisation de fluides de refroidissement ou de climatisation.

Le support 1 peut également comprendre des moyens de fixation 4, 5 à une structure de caisse ou de châssis 40, notamment à une structure du compartiment moteur définissant une face avant technique , c'est-à-dire un encadrement structurel pouvant être réalisé d'un seul tenant et assemblé au soubassement du véhicule, notamment aux longerons ou brancards, pour y fixer des équipements, notamment des valises de refroidissement, des guides d'air et/ou des moyens optiques.

Ces moyens de fixations 4, 5 sont préférentiellement agencés sur la surface extérieure des faces adjacentes à la face formée par la plaque de fermeture 3.

La deuxième face 22 peut comprendre sur sa surface extérieure un plot élastique 4. Le plot élastique 4 est agencé pour être inséré dans une traverse de la structure de caisse ou de châssis 40 du véhicule 60. Le plot élastique 4 permet ainsi de fixer le support 1 à la structure 40 à la position adéquate tout en garantissant un amortissement des chocs grâce à ses propriétés élastiques.

La troisième face 23 peut comprendre une fixation rotative 5. La fixation rotative 5 comprend un corps 52 s'étendant dans une direction perpendiculaire à la troisième face 23. Le corps 52 est mobile en rotation autour de son axe longitudinal perpendiculaire à la troisième face 23. La fixation rotative 5 comprend, à son extrémité distale, au moins un moyen de blocage 51. La fixation rotative 5 peut également comprendre un plot élastique 11 au niveau de sa base.

Le module 30 de refroidissement comprend des moyens pour sa fixation.

La structure de caisse ou de châssis 40 comprend un alésage 41 conçu pour coopérer avec la fixation rotative 5 de la troisième face 23 et une traverse de la face avant technique conçue pour coopérer avec le plot élastique 4 de la deuxième face 22.

Lors du montage du support 1 sur la structure 40, la traverse et l'alésage 41 de la structure 40 permettent l'assemblage rapide avec le support.

L'invention concerne également un véhicule 60 illustré sur la figure 6, notamment un véhicule automobile, comprenant un module 30 de refroidissement ou un support 1 tel que décrit ci-avant.

Un exemple de montage d'un mode de réalisation d'un module de refroidissement est décrit ci-après.

Dans un premier temps, on fixe l'électrovanne 31, le refroidisseur 33 et/ou la pompe 32 à fluide de refroidissement au support par au moins une vis à travers des alésages dans le support. Les organes 31, 32, 33 sont ainsi fixés à une face du support 1 à l'intérieur du cadre.

Dans un deuxième temps, le cadre du support 1 est fixé, préférentiellement par clippage sur le radiateur ou sur la boîte à eau du radiateur en faisant coopérer le premier moyen de connexion 6 et le deuxième moyen de connexion 36 entre eux.

Dans un troisième temps, le support et le radiateur sont positionnés dans la structure de caisse ou de châssis 40. Le plot élastique 4 et la fixation rotative 5 sont tous deux respectivement insérés dans la traverse et l'alésage 41 prévus à cet effet.

Enfin, la fixation rotative 5 est tournée, par exemple de 1/4 de tour, de manière à ce que le moyen de blocage 51 bloque le mouvement du module par rapport à la structure de caisse ou de châssis 40.

## Revendications

1. Support (1) multifonction pour un module (30) de refroidissement d'un moteur (50) de véhicule (60), notamment de véhicule automobile, et comprenant un cadre adapté pour loger au moins deux organes (31, 32, 33) dudit module de refroidissement ; ledit cadre comprenant au moins une face (21) destinée à être assemblée par emboîtement à un radiateur (35), **caractérisé en ce que** le cadre comprend une partie principale (2) sensiblement en forme de U et une plaque de fermeture (3) fixée sur les deux extrémités de la partie principale (2).

2. Support (1) multifonction selon la revendication précédente **caractérisé en ce que** le cadre comprend au moins un premier moyen de coopération (6) destiné à s'emboîter avec un deuxième moyen de coopération (36) du radiateur (35).

3. Support (1) multifonction selon la revendication précédente, **caractérisé en ce que** ledit premier moyen de coopération (6) est un moyen de clippage.

4. Module (30) de refroidissement comprenant un support (1) selon l'une des revendications précédentes et au moins deux, voire trois, des organes (31, 32, 33) suivants à l'intérieur du cadre du support (1) :
- une pompe (32) à fluide de refroidissement,
- une électrovanne (31), et
- un refroidisseur (33).

5. Module (30) de refroidissement selon la revendication précédente prise en combinaison avec la revendication 4, comprenant en outre un radiateur (35) fixé au support (1) par une des faces de la partie principale (2) par emboîtement, préférentiellement par clippage.

6. Module (30) de refroidissement selon la revendication précédente ou la revendication 5, **caractérisé en ce que** le refroidisseur (33), la pompe (32) à fluide de refroidissement, et/ou l'électrovanne (31) sont fixés à la partie principale (2) du cadre du support (1), notamment par au moins une vis.

7. Module (30) de refroidissement selon l'une des revendications 4 à 6, **caractérisé en ce que** la pompe (32) à fluide de refroidissement et le refroidisseur (33) sont connectés ensemble par un circuit d'eau comprenant une vanne by-pass (34), notamment une vanne by-pass en plastique.

8. Module (30) de refroidissement selon l'une des revendications 4 à 7, **caractérisé en ce qu'**il comprend une structure (40) encadrant le support (1) et le radiateur (35).

9. Moteur (50) ou structure de caisse (40) comprenant un module (30) de refroidissement selon l'une des revendications 4 à 8.

10. Véhicule (60), notamment véhicule automobile, comprenant un module (30) de refroidissement selon l'une des revendications 4 à 8 et/ou un support selon l'une des revendications 1 à 3 et/ou un moteur ou une structure de caisse selon la revendication précédente.

11. Procédé de montage d'un module (30) de refroidissement selon l'une des revendications 4 à 8 prise en combinaison avec la revendication 2, **caractérisé en ce qu'**il comprend les étapes suivantes :
- la fixation d'une électrovanne (31) et/ou d'un refroidisseur (33) et/ou d'une pompe (32) à fluide de refroidissement au support (1) ;
- la fixation du support (1), notamment par clippage, à un radiateur (35) en faisant coopérer le premier moyen de connexion (6) et le deuxième moyen de connexion (36).

12. Procédé de montage d'un véhicule (60), **caractérisé en ce qu'**il comprend le procédé de montage d'un module (30) de refroidissement selon la revendication précédente et le positionnement du module (30) dans la structure (40) du châssis du véhicule (60), et **en ce qu'**un plot élastique (4) du module et une fixation rotative (5) du module sont tous deux respectivement insérés dans une traverse et dans un alésage (41) de ladite structure (40).

## Patentansprüche

1. Multifunktionshalterung (1) für ein Kühlmodul (30) eines Motors (50) eines Fahrzeugs (60), insbesondere eines Kraftfahrzeugs, welche einen Rahmen umfasst, der dazu eingerichtet ist, mindestens zwei Organe (31, 32, 33) des Kühlmoduls aufzunehmen; wobei der Rahmen mindestens eine Seite (21) umfasst, die dazu eingerichtet ist, durch Aufstecken an einen Kühler (35) angebaut zu werden, **dadurch gekennzeichnet, dass** der Rahmen einen im Wesentlichen U-förmigen Hauptteil (2) und eine Verschlussplatte (3), die an den zwei Enden des Hauptteils (2) befestigt ist, umfasst.

2. Multifunktionshalterung (1) nach dem vorhergehenden Anspruch, **dadurch gekennzeichnet, dass** der Rahmen mindestens ein erstes Mittel zum Zusammenwirken (6) umfasst, das dazu bestimmt ist, mit einem zweiten Mittel zum Zusammenwirken (36) des Kühlers (35) zusammengepasst zu werden.

3. Multifunktionshalterung (1) nach dem vorhergehenden Anspruch, **dadurch gekennzeichnet, dass** das erste Mittel zum Zusammenwirken (6) ein Clipsmittel ist.

4. Kühlmodul (30), welches eine Halterung (1) nach einem der vorhergehenden Ansprüche und mindestens zwei oder sogar drei der folgenden Organe (31, 32, 33) im Inneren des Rahmens der Halterung (1) umfasst:
- eine Kühlfluidpumpe (32),
- ein Magnetventil (31) und
- eine Kühlvorrichtung (33).

5. Kühlmodul (30) nach dem vorhergehenden Anspruch in Kombination mit Anspruch 4, welches außerdem einen Kühler (35) umfasst, der an der Halterung (1) über eine der Seiten des Hauptteils (2) durch Zusammenpassen, vorzugsweise durch Clipsen, befestigt ist.

6. Kühlmodul (30) nach dem vorhergehenden Anspruch oder Anspruch 5, **dadurch gekennzeichnet, dass** die Kühlvorrichtung (33), die Kühlfluidpumpe (32) und/oder das Magnetventil (31) am Hauptteil (2) des Rahmens der Halterung (1) befestigt sind, insbesondere durch mindestens eine Schraube.

7. Kühlmodul (30) nach einem der Ansprüche 4 bis 6, **dadurch gekennzeichnet, dass** die Kühlfluidpumpe (32) und die Kühlvorrichtung (33) durch einen Wasserkreislauf miteinander verbunden sind, der ein Bypassventil (34) umfasst, insbesondere ein Bypassventil aus Kunststoff.

8. Kühlmodul (30) nach einem der Ansprüche 4 bis 7, **dadurch gekennzeichnet, dass** es eine Struktur (40) umfasst, welche die Halterung (1) und den Kühler (35) umrahmt.

9. Motor (50) oder Karosseriestruktur (40), der bzw. die ein Kühlmodul (30) nach einem der Ansprüche 4 bis 8 umfasst.

10. Fahrzeug (60), insbesondere Kraftfahrzeug, welches ein Kühlmodul (30) nach einem der Ansprüche 4 bis 8 und/oder eine Halterung nach einem der Ansprüche 1 bis 3 und/oder einen Motor oder eine Karosseriestruktur nach dem vorhergehenden Anspruch umfasst.

11. Verfahren zur Montage eines Kühlmoduls (30) nach einem der Ansprüche 4 bis 8 in Kombination mit Anspruch 2, **dadurch gekennzeichnet, dass** es die folgenden Schritte umfasst:
- die Befestigung eines Magnetventils (31) und/oder einer Kühlvorrichtung (33) und/oder einer Kühlfluidpumpe (32) an der Halterung (1);
- die Befestigung der Halterung (1), insbesondere durch Clipsen, an einem Kühler (35), indem man das erste Verbindungsmittel (6) und das zweite Verbindungsmittel (36) zusammenwirken lässt.

12. Verfahren zur Montage eines Fahrzeugs (60), **dadurch gekennzeichnet, dass** es das Verfahren zur Montage eines Kühlmoduls (30) nach dem vorhergehenden Anspruch und die Positionierung des Moduls (30) in der Struktur (40) des Fahrgestells des Fahrzeugs (60) umfasst, und dadurch, dass ein elastischer Klotz (4) des Moduls und ein Drehbefestigungselement (5) des Moduls beide in einen Querträger bzw. in eine Bohrung (41) der Struktur 40) eingesetzt werden.

## Claims

1. Multifunction support (1) for a cooling module (30) of an engine (50) of a vehicle (60), in particular a motor vehicle, comprising a frame designed to house at least two members (31, 32, 33) of said cooling module; said frame comprising at least one face (21) intended to be joined by nesting to a radiator (35), **characterized in that** the frame comprises a substantially U-shaped main part (2) and a closing plate (3) fastened to the two ends of the main part (2).

2. Multifunction support (1) according to the preceding claim, **characterized in that** the frame comprises at least one first cooperation means (6) intended to nest with a second cooperation means (36) of the radiator (35).

3. Multifunction support (1) according to the preceding claim, **characterized in that** said first cooperation means (6) is a clipping means.

4. Cooling module (30) comprising a support (1) according to one of the preceding claims, and at least two or even three of the following members (31, 32, 33) inside the support frame (1):
- a cooling fluid pump (32),
- a solenoid valve (31), and
- a cooler (33).

5. Cooling module (30) according to the preceding claim taken in combination with Claim 4, also comprising a radiator (35) fastened to the support (1) by one of the faces of the main part (2) by nesting, preferably by clipping.

6. Cooling module (30) according to the preceding claim or Claim 5, **characterized in that** the cooler (33), the cooling fluid pump (32) and/or the solenoid valve (31) are fastened to the main part (2) of the support frame (1), in particular by at least one screw.

7. Cooling module (30) according to one of Claims 4 to 6, **characterized in that** the cooling fluid pump (32) and the cooler (33) are connected together by a water circuit comprising a bypass valve (34), in particular a plastic bypass valve.

8. Cooling module (30) according to one of Claims 4 to 7, **characterized in that** it comprises a structure (40) framing the support (1) and the radiator (35).

9. Engine (50) or body structure (40) comprising a cooling module (30) according to one of Claims 4 to 8.

10. Vehicle (60), in particular a motor vehicle, comprising a cooling module (30) according to one of Claims 4 to 8 and/or a support according to one of Claims 1 to 3 and/or an engine or a body structure according to the preceding claim.

11. Method for assembling a cooling module (30) according to one of Claims 4 to 8 taken in combination with Claim 2, **characterized in that** it comprises the following steps:
- fastening a solenoid valve (31) and/or a cooler (33) and/or a cooling fluid pump (32) to the support (1);
- fastening the support (1), in particular by clipping, to a radiator (35) by making the first connection means (6) and the second connection means (36) cooperate.

12. Method for assembling a vehicle (60), **characterized in that** it comprises the method for assembling a cooling module (30) according to the preceding claim and the positioning of the module (30) in the structure (40) of the chassis of the vehicle (60), and **in that** an elastic pad (4) of the module and a rotary fastening (5) of the module are both respectively inserted in a crossmember and in a bore (41) of said structure (40).
